(19) **Europäisches Patentamt / European Patent Office / Office européen des brevets**

(11) **EP 2 799 890 B1**

(12) **FASCICULE DE BREVET EUROPEEN**

(45) Date de publication et mention
de la délivrance du brevet:
**20.01.2016 Bulletin 2016/03**

(51) Int Cl.:
***G01P 5/00*** *(2006.01)*

(21) Numéro de dépôt: **14166616.4**

(22) Date de dépôt: **30.04.2014**

(54) **Procédé et système de détermination d'une vitesse par rapport à l'air d'un aéronef**

Verfahren und System zur Geschwindigkeitsbestimmung eines Luftfahrzeugs gegenüber der Luft

Method and system for determining the speed of an aircraft relative to the air

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.05.2013 FR 1301029**

(43) Date de publication de la demande:
**05.11.2014 Bulletin 2014/45**

(73) Titulaire: **Thales**
**92400 Courbevoie (FR)**

(72) Inventeurs:
• **Meulle, Guillaume**
**31300 TOULOUSE (FR)**
• **Caussat, Thomas**
**82000 MONTAUBAN (FR)**
• **Beaufils, Arnaud**
**31470 FONSORBES (FR)**

• **Pierre, Christophe**
**31470 FONTENILLES (FR)**

(74) Mandataire: **Priori, Enrico et al**
**Marks & Clerk France**
**Conseils en Propriété Industrielle**
**Immeuble «Visium»**
**22, avenue Aristide Briand**
**94117 Arcueil Cedex (FR)**

(56) Documents cités:
**EP-A2- 2 348 285     US-A1- 2009 134 981
US-B1- 6 977 608**

• **LEFAS C C: "Real-Time Wind Estimation and
Tracking with Transponder Downlinked Airspeed
and Heading Data", IEEE TRANSACTIONS ON
AEROSPACE AND ELECTRONIC SYSTEMS,
IEEE SERVICE CENTER, PISCATAWAY, NJ, US,
vol. AES-10, no. 2, 1 mars 1987 (1987-03-01),
pages 169-174, XP011168476, ISSN: 0018-9251**

**Description**

L'invention porte sur un procédé pour déterminer une vitesse par rapport à l'air (par exemple vitesse « vraie » TAS, de l'anglais « True Air Speed », et/ou vitesse conventionnelle ou corrigée CAS, de l'anglais « Calibrated Air Speed ») d'un aéronef, ainsi que sur un système pour la mise en oeuvre d'un tel procédé. L'invention porte également sur l'utilisation de ce procédé pour détecter une défaillance d'une chaîne anémométrique (basée sur une sonde Pitot ou Pitot-statique ou un LIDAR et de capteurs de pression associés) d'un aéronef, pour pallier une telle défaillance voire pour assurer le pilotage automatique de l'aéronef.

L'invention s'applique principalement aux avions, mais peut être utile aussi pour d'autres aéronefs tels que des hélicoptères ou des planeurs.

La CAS est un paramètre fondamental de la conduite du vol, car elle représente la capacité d'un avion à se maintenir en vol. La CAS est une information indispensable au fonctionnement des systèmes de pilotage automatique.

De manière conventionnelle, la vitesse conventionnelle est mesurée par des chaînes de capteurs et sondes embarqués, de type « Pitot ou Pitot-statique » (qui fournissent également des informations d'altitude) ou LIDAR et leurs capteurs de pression associés. En cas de défaillance sur une chaîne de mesure, une information d'altitude peut être obtenue de manière indépendante, par exemple grâce à un système de navigation satellitaire (GNSS). Par contre, il n'existe pas à ce jour de solution satisfaisante pour déterminer la vitesse de l'aéronef par rapport à l'air dans une telle éventualité. Les constructeurs d'avions indiquent les procédures à suivre dans ce cas, pour permettre le pilotage manuel de l'aéronef.

Le document EP 2 348 285 divulgue la possibilité de calculer la vitesse par rapport à l'air d'un aéronef à partir de la connaissance de sa vitesse par rapport au sol - obtenue grâce à un système de navigation satellitaire - et de la vitesse du vent. En cas de défaillance des chaînes anémométriques, cette dernière information peut être estimée à partir de données statistiques ou être communiquée par une station au sol. Cette solution est peu satisfaisante car l'estimée de la valeur de vitesse du vent risque d'être entachée d'incertitudes importantes.

L'article de A.C. in't Veld et al. « Real-time Wind Profile Estimation using Airborne Sensors », AIAA Guidance Navigation and Control Conference, 8 - 11 août 2011, Portland, Oregon, Etats-Unis (AIAA 2011-6662) divulgue un procédé d'estimation d'un profil de vitesse du vent en fonction de l'altitude dans une région de contrôle terminale (TMA, « Terminal Maneuvering Area ») par filtrage de Kalman de données acquises par des capteurs embarqués sur des aéronefs et transmis selon le protocole ADS-B. Ce procédé ne vise pas à pallier la défaillance ou l'absence des chaînes anémométriques, mais à connaître la vitesse locale du vent à des altitudes différentes de celle à laquelle évolue l'aéronef.

L'invention vise à remédier aux inconvénients précités de l'art antérieur et plus particulièrement à procurer un procédé et un système permettant de déterminer de manière fiable la vitesse d'un aéronef par rapport à l'air, même en cas de défaillance des chaînes embarquées. Ce procédé et ce système permettent également de vérifier le bon fonctionnement de ces chaînes, et de détecter leur défaillance éventuelle.

Un objet de l'invention permettant d'atteindre ce but est un procédé de détermination d'une vitesse par rapport à l'air d'un aéronef, dit aéronef assisté, comprenant les étapes suivantes :

   a) déterminer une position dudit aéronef assisté ;
   b) mesurer une vitesse par rapport au sol dudit aéronef assisté ;
   c) recevoir une pluralité de messages en provenance d'une pluralité d'autres aéronefs, dits assistants, chaque dit message contenant : une première information, indicative d'une position d'un dit aéronef assistant, et une deuxième information, indicative d'une vitesse du vent à ladite position ;
   d) estimer une vitesse du vent à la position dudit aéronef assisté par interpolation des valeurs de vitesse du vent aux positions desdits aéronefs assistants obtenues lors de ladite étape c) ; et
   e) calculer une vitesse vraie TAS dudit aéronef assisté par différence vectorielle entre sa vitesse par rapport au sol, mesurée à ladite étape b), et la vitesse du vent estimée lors de ladite étape d).

Le procédé peut comprendre également l'étape suivante :

   f) calculer, à partir de la vitesse vraie calculée lors de ladite étape e), au moins un paramètre choisi parmi une vitesse conventionnelle ou corrigée CAS et un nombre de Mach.

Selon des modes de réalisation particuliers du procédé de l'invention :

-   Lesdites étapes a) et b) peuvent être mises en oeuvre au moyen d'au moins un dispositif embarqué sur ledit aéronef assisté et choisi parmi : un récepteur GNSS et une centrale inertielle.
-   Lesdits messages peuvent être diffusés par lesdits aéronefs assistants. En particulier, lesdits messages peuvent être diffusés par lesdits aéronefs assistants et reçus par ledit aéronef assistés selon le protocole ADS-B.

- Ladite deuxième information peut comprendre une mesure de vitesse par rapport au sol et une mesure de vitesse par rapport à l'air dudit avion assistant, dont peut être déduite ladite vitesse du vent.
- Au moins lesdites étapes d) et e) peuvent être réalisées par un processeur embarqué sur ledit aéronef assisté.
- Ladite étape d) peut être mise en oeuvre par Kriegeage.
- Lesdites étapes c) et d) peuvent comprendre : la réception d'un nombre n prédéfini desdits messages, l'extraction des premières et deuxièmes informations contenues dans ces messages et leur stockage dans une file d'attente de longueur n ; le calcul d'une première estimation de ladite vitesse du vent par interpolation à partir des informations stockées dans ladite file d'attente ; et lors de la réception ultérieure d'autres dits messages, le stockage des informations contenues dans ladite file d'attente et la suppression concomitante de ladite file d'attente d'information plus anciennes, selon le principe du premier entré - premier sorti, ou FIFO ; et le calcul d'une nouvelle estimation de ladite vitesse du vent par interpolation à partir des informations stockées dans la file d'attente ainsi modifiée.
- Le procédé peut comprendre également la détermination d'un paramètre d'incertitude de ladite vitesse par rapport à l'air dudit aéronef assisté.
- Lesdits messages peuvent contenir également une troisième information représentative de la pression au niveau de la mer en correspondance de la position de chaque dit aéronef assistant, auquel cas le procédé peut comporter également une étape d'estimation de la pression au niveau de la mer en correspondance de la position dudit aéronef assisté par interpolation desdites troisièmes informations.

Un autre objet de l'invention est un procédé de vérification du fonctionnement d'une chaîne anémométrique embarquée sur un aéronef, dit aéronef assisté, comportant les étapes suivantes :

A) mesurer une vitesse par rapport à l'air dudit aéronef assisté au moyen de ladite chaîne anémométrique ;
B) déterminer ladite vitesse par rapport à l'air dudit aéronef, ainsi que son paramètre d'incertitude, par un procédé tel que décrit ci-dessus ; et
C) considérer que ladite chaîne anémométrique est défaillante lorsque la différence entre ladite vitesse mesurée et ladite vitesse déterminée excède ledit paramètre d'incertitude.

Encore un autre objet de l'invention est l'utilisation d'un procédé de détermination d'une vitesse par rapport à l'air d'un aéronef tel que décrit ci-dessus en cas de défaillance d'une chaîne anémométrique embarquée sur ledit aéronef assisté.

Encore un autre objet de l'invention est un procédé de pilotage automatique d'un aéronef, dit assisté, comportant les étapes suivantes :

i) déterminer une vitesse par rapport à l'air dudit aéronef assisté ainsi qu'un paramètre d'incertitude de ladite vitesse au moyen d'un procédé tel que décrit ci-dessus ;
ii) corriger les limites supérieure et inférieure de vitesse par rapport à l'air admises pour le vol dudit aéronef en tenant compte dudit paramètre d'incertitude ; et
iii) utiliser un système de pilotage automatique pour maintenir la vitesse par rapport à l'air dudit aéronef assisté à l'intérieur desdites limites supérieure et inférieure corrigées.

Encore un autre objet de l'invention est un système de détermination d'une vitesse par rapport à l'air d'un aéronef, dit aéronef assisté par un procédé tel que décrit ci-dessus, comprenant :

- un dispositif de détermination de la position et de la vitesse par rapport au sol dudit aéronef ;
- un récepteur pour recevoir une pluralité de messages en provenance d'une pluralité d'autres aéronefs, dits assistants, chaque dit message contenant : une première information, indicative d'une position d'un dit aéronef assistant, et une deuxième information, indicative d'une vitesse du vent à ladite position ; et
- un processeur configuré ou programmé pour estimer une vitesse du vent à la position dudit aéronef assisté par interpolation des valeurs de vitesse du vent aux positions desdits aéronefs assistants et pour calculer une vitesse par rapport à l'air dudit aéronef assisté par différence vectorielle entre sa vitesse par rapport au sol et la vitesse estimée du vent.

Un tel système peut comprendre également une chaîne anémométrique pour déterminer une vitesse du vent ou une vitesse de l'aéronef par rapport à l'air, ainsi qu'un émetteur pour diffuser un message contenant : une première information, indicative d'une position dudit aéronef, et une deuxième information, indicative d'une vitesse du vent à ladite position.

Ledit récepteur, et le cas échéant ledit émetteur, peuvent être respectivement un récepteur et un émetteur ADS-B.

D'autres caractéristiques, détails et avantages de l'invention ressortiront à la lecture de la description faite en référence aux dessins annexés donnés à titre d'exemple et qui représentent :

- La figure 1, une illustration générale d'un procédé selon l'invention ;
- La figure 2, l'étape d'interpolation de la vitesse du vent ; et
- Les figures 3A et 3B, respectivement, la partie émettrice et la partie réceptrice d'un système selon un mode de réalisation de l'invention.

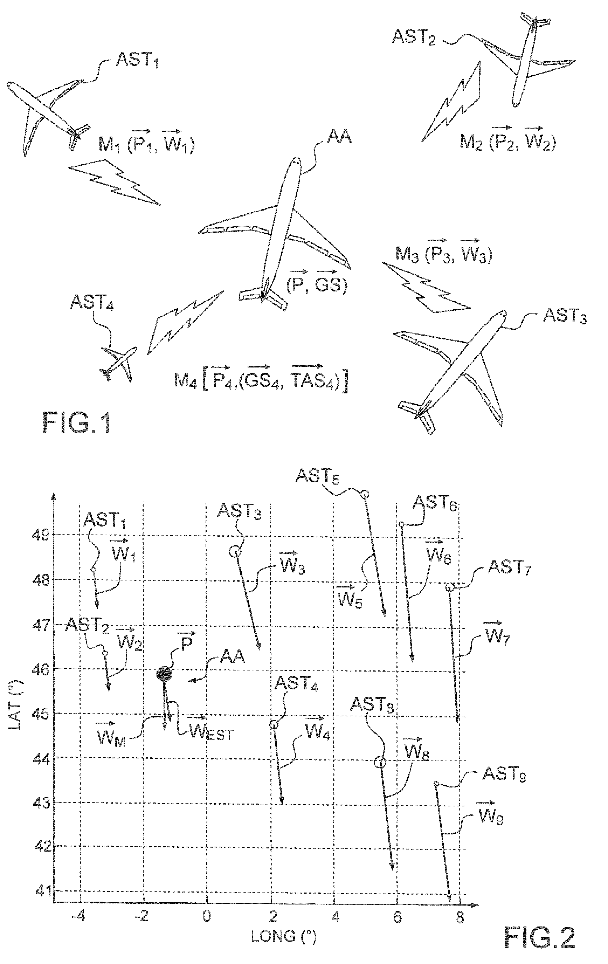

Comme illustré sur la figure 1, un procédé selon l'invention permet à un aéronef AA, qu'on appellera par la suite « aéronef assisté », de calculer une estimation de la vitesse du vent qu'il subit, et d'en déduire sa vitesse par rapport à l'air, à l'aide de messages $M_1$ - $M_4$ qu'il reçoit d'autres aéronefs (dits « assistants ») $AST_1$ - $AST_4$. Chacun de ces messages, $M_i$, contient essentiellement deux informations : une première information - datée - de position (latitude, longitude et altitude à un instant donné) - de l'aéronef assistant $AST_i$, $\vec{P_i}$ ($\vec{P_1}$ à $\vec{P_4}$ dans l'exemple illustré sur la figure), que ledit aéronef assistant détermine de manière conventionnelle à l'aide d'un système de navigation satellitaire (GNSS, de l'anglais « Global Navigation Satellite System », par exemple GPS) ou d'une centrale inertielle, et une deuxième information relative à la vitesse du vent subi par ledit aéronef assistant. Cette deuxième information peut être directement une mesure de la vitesse du vent (en intensité et direction) $\vec{W_i}$; c'est le cas pour les messages $M_1$ - $M_3$, émis par les aéronefs assistants $AST_1$, $AST_2$ et. $AST_3$ En variante, comme dans le cas du message $M_4$ émis par l'aéronef assistant $AST_4$, il peut s'agir d'une mesure conjointe de vitesse par rapport au sol $\vec{GS_4}$, et de vitesse « vraie » par rapport à l'air, $\vec{TAS_4}$. Dans ce cas, la vitesse du vent subi par l'aéronef $AST_4$ peut être déterminée par différence entre ces deux vecteurs $\vec{W_4} = \vec{GS_4} - \vec{TAS_4}$. La deuxième information est déterminée par chaque aéronef assistant à l'aide de ses chaînes anémométriques et/ou anémobarométriques (sondes Pitot-statiques ou LIDARs et capteurs associés) et d'un système de navigation satellitaire ou inertiel.

Les messages $M_i$ peuvent contenir d'autres champs d'information et notamment un identifiant de l'aéronef émetteur et éventuellement un champ de validité des données transmises (ce dernier n'est pas nécessaire si l'on prévoit que la transmission ne s'effectue que lorsque les données sont considérées valides).

Les messages peuvent être diffusés directement par les aéronefs, par exemple au moyen du protocole ADS-B, connu de l'art antérieur. D'autres protocoles peuvent également être utilisés, prévoyant par exemple le passage par une station relais au sol et/ou l'établissement d'une liaison entre l'aéronef émetteur (assistant) et l'aéronef récepteur (assisté).

Les données transmises par les aéronefs assistants réalisent un échantillonnage du champ vectoriel représentant la vitesse et direction du vent dans une région de l'atmosphère qui entoure l'aéronef assisté AA. Cela est représenté (en deux dimensions : longitude LONG et latitude LAT, toutes deux exprimées en degrés « ° » ; plus souvent, en réalité, l'altitude sera également prise en considération) sur la figure 2, qui montre une situation où neuf aéronefs assistants $AST_1$ - $AST_9$ communiquent leurs vitesses (vectorielles) du vent $\vec{W_1} - \vec{W_9}$ à un aéronef assisté AA, situé à la position $\vec{P}$ ; sur la figure 2, chaque aéronef assistant est représenté par un cercle d'autant plus grand que l'information fournie est récent. A bord de l'aéronef assisté AA, un processeur estime la vitesse vectorielle locale du vent, $\vec{W}_{EST}$ par interpolation des valeurs communiquées $\vec{W_1} - \vec{W_9}$. De manière préférée, l'interpolation est effectuée en quatre dimensions : trois dimensions spatiales et une dimension temporelle. A titre de comparaison, le vecteur $\vec{W}_M$ représente la vitesse du vent mesurée par une chaîne anémométrique de l'aéronef AA ; on peut constater que l'erreur d'estimation est particulièrement faible.

L'interpolation peut être calculée, de manière préférentielle, par l'algorithme de Kriegeage, connu en soi. Cependant, d'autres méthodes peuvent également être utilisées, et notamment une interpolation linéaire, une interpolation par *spline* cardinale, une approximation par plus proche voisin, etc.

Avantageusement, l'algorithme d'interpolation (Kriegeage ou autre) peut être alimenté en données d'entrée par une file d'attente « premier entrant - premier sorti » (FIFO, de l'anglais « First In - First Out ») de longueur constante, gérée de la façon suivante :

- lors d'une étape d'initialisation, les données reçues en entrée alimentent la file d'attente jusqu'à ce qu'elle atteigne une longueur définie (N éléments ou données) ;
- l'algorithme d'interpolation est appliqué à ces N éléments pour donner une première estimation de la vitesse du vent ;
- à chaque fois qu'une nouvelle donnée est acquise, elle est intégrée à la file, tandis que l'élément le plus ancien est supprimé ; l'algorithme d'interpolation est appliqué au nouvel ensemble de N données ainsi obtenu.

Le processeur connait également la vitesse de l'aéronef assisté par rapport au sol, $\overrightarrow{GS}$, qui est déterminée à l'aide d'un récepteur GNSS et/ou d'une centrale inertielle, ou encore qui est mesurée par une station radar au sol et transmise au processeur par une liaison radio. La vitesse vraie par rapport à l'air est donc calculée par différence vectorielle entre la vitesse au sol et la vitesse du vent estimée : $\overrightarrow{TAS} = \overrightarrow{GS} - \overrightarrow{W_{EST}}$ .

Le plus souvent, la connaissance de la TAS n'est pas suffisante, et il est nécessaire de calculer la vitesse conventionnelle ou corrigée CAS, ce qui est connu en soi. Par exemple, on peut procéder de la façon suivante :

1) Déterminer la TAS scalaire: $TAS = \sqrt{\overrightarrow{TAS} \bullet \overrightarrow{TAS}}$ , où • est l'opérateur produit scalaire.

2) Mesurer la température à l'altitude courante de l'avion ou la calculer à partir de l'atmosphère standard et d'un delta ISA préférentiellement fourni par un organisme météo. Cette température est notée T.

2) Calculer le nombre de Mach : $M = TAS / \sqrt{\gamma rT}$ où $\gamma$ = 1,4 et r est la constante des gaz parfaits (r= 287,053 u.s.i. - unités du système international).

3) calculer $qcp=(1+0,2M^2)^{3,5} -1$.; cette grandeur représente la différence entre la pression dynamique et la pression statique, rapportée à la pression au niveau de la mer.

4) calculer un facteur de correction qui vaut $cf = (\dfrac{288,15 - 0,0019812 Zp}{288,15})^{5,256114}$ si l'altitude de pression Zp - exprimée en pieds (ft) - est inférieure à l'altitude de la tropopause Tropo_Alt (préférentiellement fournie par un organisme météo ou à défaut entrée dans un système de gestion de vol, FMS) et $cf = 0,223353 e^{\frac{Tropo\_Alt - Zp}{20804,945}}$ sinon 5) calculer la CAS (scalaire) en noeuds (kts) en appliquant la formule suivante:

$$CAS = 661.4748 \sqrt{5(1 + qcp \times cf)^{\frac{2}{7}} - 1}$$ .

Dans certains modes de réalisation on pourra s'arrêter à l'étape 2, c'est-à-dire au calcul du nombre de Mach.

Avantageusement, la précision de l'estimation est connue et définie par un paramètre d'incertitude $\sigma$ tel qu'il existe une probabilité de N% (N étant une valeur prédéfinie inférieure à 100, par exemple 95% ou 99%) que la différence entre la valeur réelle de la CAS et sa valeur estimée se trouve dans une plage [$-\sigma$, $+\sigma$]. La valeur du paramètre d'incertitude $\sigma$ peut être fournie par l'algorithme d'interpolation (Kriegeage ou autre), et/ou être déterminé expérimentalement.

Le calcul du nombre de Mach et/ou de la CAS nécessite la connaissance de l'altitude de pression Zp de l'aéronef assistée. Ce paramètre peut être connu grâce aux capteurs embarqués, même en présence d'une défaillance sur une voie empêchant la mesure de la vitesse par rapport à l'air. D'autres modes de réalisation permettent de récupérer cette information même si elle n'est pas fournie par les capteurs embarqués.

Une première possibilité consiste à calculer Zp à partir de la hauteur par rapport au sol, mesurée par GNSS, de la pression locale au niveau de la mer, fournie par exemple par un organisme météorologique via une station au sol, et du modèle d'évolution de la pression avec l'altitude de l'atmosphère standard.

Une deuxième possibilité consiste à procéder par interpolation, comme pour la détermination de la vitesse du vent. Dans ce cas, les aéronefs assistants transmettent également une troisième information représentative de leur pression locale au niveau de la mer ; cette information est reçue par l'aéronef assistée et utilisée pour calculer, par interpolation (Kriegeage ou autre), la pression au niveau de la mer à la latitude et longitude dudit aéronef assisté. La troisième information peut être constituée directement par une valeur de pression (« QNH »), ou par des grandeurs permettant de déterminer cette valeur via un calcul (par exemple, une hauteur par rapport au sol et une pression locale perçue par l'aéronef).

Il existe plusieurs applications possibles d'un procédé selon l'invention tel que décrit ci-dessus.

Premièrement, il peut être utilisé pour pallier la défaillance des chaînes anémométriques embarquées et permettre un pilotage manuel, voire automatique, de l'aéronef dans des conditions de sécurité maximale dans une telle éventualité. En ce qui concerne le pilotage automatique, le paramètre d'incertitude $\sigma$ de l'estimation de la CAS peut être utilisé pour appliquer une limitation supplémentaire au domaine de vol. Soient $V_{IS}$ et $V_{MO}$, respectivement, la limite basse et haute du domaine de vol, on peut régler le système de pilotage automatique pour qu'il maintienne la vitesse (CAS) de l'aéronef, estimée conformément à l'invention, dans l'intervalle [$V_{min}$; $V_{max}$] avec $V_{min}=V_{LC}+\sigma$ et $V_{max}=V_{MO}-\sigma$. Cela assure avec une probabilité de N% que l'aéronef reste dans son domaine de vol.

Le procédé de l'invention peut également servir à vérifier le bon fonctionnement des chaînes anémométriques. En effet, si la vitesse $CAS_M$ mesurée par lesdits capteurs diffère de la vitesse estimée conformément à l'invention de plus que σ (en valeur absolue), cela signifie qu'il y une probabilité de N% que la valeur mesurée soit erronée. Dans ce cas, avantageusement, seule la vitesse estimée est utilisée pour le pilotage (automatique ou manuel) de l'appareil, et le ou les pilotes sont avertis de ce fait.

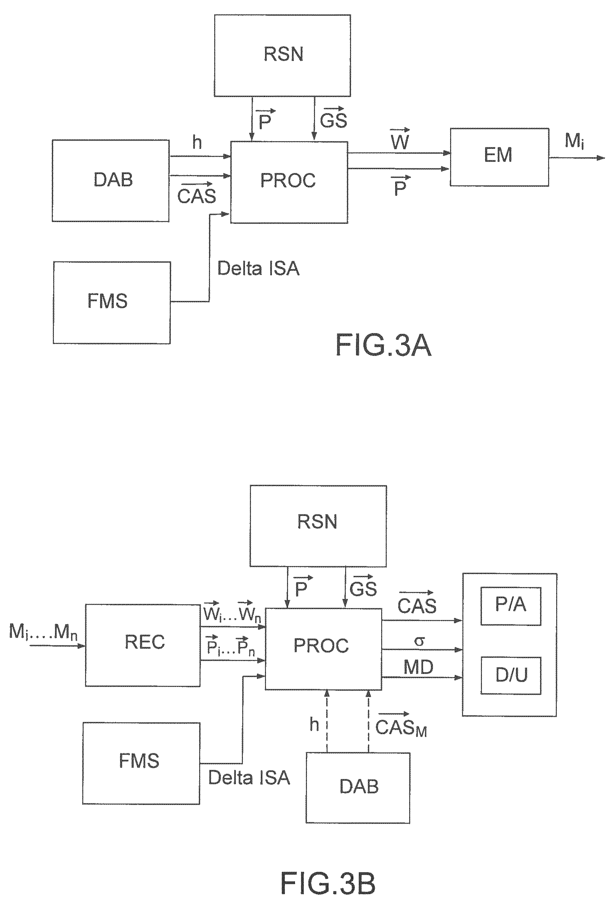

Les figures 3A et 3B montrent un schéma fonctionnel d'un système de mise en oeuvre du procédé décrit ci-dessus. Dans un souci de clarté, ce système a été décomposé en un sous-système émetteur (fig. 3A), utilisé par un aéronef assistant, et un sous-système récepteur (fig. 3B), utilisé par un aéronef assisté. En général, un aéronef doit pouvoir fonctionner aussi bien en tant qu'assistant que d'assisté, par conséquent il comportera les deux sous-systèmes. Par ailleurs, ces derniers peuvent partager certains éléments (indiqués par les mêmes références sur les deux figures).

Le sous-système émetteur de la figure 3A comprend un processeur PROC, un système de gestion de vol FMS, une chaîne anémométrique ou anémobarométrique DAB, un récepteur GNSS ou une station inertielle RSN et un émetteur, de préférence de type ADS-B, EM. Le processeur PROC reçoit de la chaîne anémobarométrique DAB une mesure vectorielle de la vitesse par rapport à l'air $\overrightarrow{CAS}$ ainsi qu'une valeur d'altitude h ; il reçoit du dispositif RSN une information de position $\overrightarrow{P}$ et de vitesse par rapport au sol $\overrightarrow{GS}$ ; en outre, il reçoit du système de gestion de vol FMS une information DeltaISA, d'écart entre la température mesurée à l'extérieur de l'aéronef et la température de l'atmosphère standard à la même altitude. Le processeur PROC utilise ces éléments d'information pour calculer la vitesse du vent de la manière suivante : h et DeltaISA permettent de convertir la vitesse conventionnelle $\overrightarrow{CAS}$ en vitesse vraie $\overrightarrow{TAS}$, puis la vitesse du vent $\overrightarrow{W}$ est calculée par différence vectorielle entre la vitesse au sol et la TAS :

$$\overrightarrow{W} = \overrightarrow{GS} - \overrightarrow{TAS} \ .$$

La vitesse du vent ainsi calculée et la position obtenue directement par le dispositif RSN sont ensuite communiquées à l'émetteur EM, qui les insère dans un message $M_i$ qu'il transmet en modalité diffusion. La transmission peut être inhibée si une défaillance de la chaîne anémobarométrique est détectée, indiquant que la vitesse du vent déterminée n'est pas correcte ou fiable. En variante, un champ « de validité » du message peut être utilisé pour indiquer si l'information transmise est correcte et fiable ou pas.

Le sous-système récepteur de la figure 3B comprend, lui aussi, un processeur PROC (qui peut être le même que celui du sous-système émetteur, ou pas), un système de gestion de vol FMS, une chaîne anémométrique ou anémobarométrique DAB, un récepteur GNSS ou une station inertielle RSN, un récepteur, de préférence de type ADS-B, REC, un système de pilotage automatique P/A et/ou un système d'affichage D/U.

Le récepteur REC reçoit une pluralité de messages $M_1...M_n$ émis par les sous-systèmes émetteurs d'autres aéronefs et en extrait les informations de position $\overrightarrow{P}_1...\overrightarrow{P}_n$ et de vitesse du vent $\overrightarrow{W}_1...\overrightarrow{W}_n$ (cette dernière information pouvant être remplacée, comme expliqué plus haut, par des valeurs de vitesse par rapport au sol et de vitesse vraie par rapport à l'air), qui sont communiquées au processeur. Ce dernier utilise ces informations, avec les valeurs de position et de vitesse par rapport au sol obtenues par le dispositif RSN, pour calculer la vitesse TAS en appliquant le procédé décrit plus haut. Si les messages reçus comprennent un champ de validité, ce dernier est vérifié et seules les informations considérées comme valables sont utilisées. Le processeur reçoit également une valeur DeltaISA du système de gestion de vol TAS et une mesure d'altitude h de la chaîne anémobarométrique DAB, qui permettent de calculer la vitesse corrigée CAS ; il calcule également le paramètre d'incertitude σ. En outre, il peut recevoir de la DAB une valeur mesurée de la vitesse corrigée, $CAS_M$, et la comparer à celle estimée - et au paramètre d'incertitude σ - de manière à détecter une éventuelle défaillance de la chaîne anémobarométrique. En fonction du résultat de cette comparaison, le processeur transmet au système de pilotage automatique P/A et/ou à un système d'affichage D/U :

- soit la vitesse corrigée mesurée $CAS_M$, si la DAB n'a pas été identifié comme défaillante ;
- soit, dans le cas contraire, la vitesse corrigée estimée, ainsi que son paramètre d'incertitude σ et un identifiant MD signifiant que le pilotage doit se faire en « mode dégradé », sur la base d'une vitesse estimée et non mesurée.

En variante, le processeur peut communiquer avec une station au sol qui effectue les calculs, et principalement l'interpolation permettant de déterminer la vitesse du vent.

## Revendications

1. Procédé de détermination d'une vitesse par rapport à l'air d'un aéronef, dit aéronef assisté (AA), comprenant les étapes suivantes :

a) déterminer une position ($\vec{P}$) dudit aéronef assisté ;

b) mesurer une vitesse par rapport au sol ($\vec{GS}$) dudit aéronef assisté ;

c) recevoir une pluralité de messages (M$_1$ - M$_4$) en provenance d'une pluralité d'autres aéronefs, dits assistants (AST$_1$ - AST$_4$), chaque dit message contenant : une première information $(\vec{P_1} - \vec{P_4})$, indicative d'une position d'un dit aéronef assistant, et une deuxième information $(\vec{W_1} - \vec{W_3}; \vec{GS_4}, \vec{TAS_4})$, indicative d'une vitesse du vent à ladite position ;

d) estimer une vitesse du vent ($\vec{W_{EST}}$) à la position dudit aéronef assisté par interpolation des valeurs de vitesse du vent aux positions desdits aéronefs assistants obtenues lors de ladite étape c) ; et

e) calculer une vitesse vraie TAS dudit aéronef assisté par différence vectorielle entre sa vitesse par rapport au sol, mesurée à ladite étape b), et la vitesse du vent estimée lors de ladite étape d).

2. Procédé selon la revendication 1 comprenant également l'étape suivante :

f) calculer, à partir de la vitesse vraie calculée lors de ladite étape e), au moins un paramètre choisi parmi une vitesse conventionnelle ou corrigée CAS et un nombre de Mach.

3. Procédé selon l'une des revendications précédentes dans lequel lesdites étapes a) et b) sont mises en oeuvre au moyen d'au moins un dispositif (RSN) embarqué sur ledit aéronef assisté et choisi parmi : un récepteur GNSS et une centrale inertielle.

4. Procédé selon l'une des revendications précédentes dans lesquels lesdits messages sont diffusés par lesdits aéronefs assistants.

5. Procédé selon la revendication 4 dans lequel lesdits messages sont diffusés par lesdits aéronefs assistants et reçus par ledit aéronef assistés selon le protocole ADS-B.

6. Procédé selon l'une des revendications précédentes dans lequel ladite deuxième information comprend une mesure de vitesse par rapport au sol ($\vec{GS_4}$) et une mesure de vitesse par rapport à l'air ($\vec{TAS_4}$) dudit avion assistant (AST$_4$), dont peut être déduite ladite vitesse du vent.

7. Procédé selon l'une des revendications précédentes dans lequel au moins lesdites étapes d) et e) sont réalisées par un processeur embarqué (PROC) sur ledit aéronef assisté.

8. Procédé selon l'une des revendications précédentes dans lequel ladite étape d) est mise en oeuvre par Kriegeage.

9. Procédé selon l'une des revendications précédentes dans lequel lesdites étapes c) et d) comprennent :

- la réception d'un nombre N prédéfini desdits messages, l'extraction des premières et deuxièmes informations contenues dans ces messages et leur stockage dans une file d'attente de longueur N ;
- le calcul d'une première estimation de ladite vitesse du vent par interpolation à partir des informations stockées dans ladite file d'attente ; et
- lors de la réception ultérieure d'autres dits messages, le stockage des informations contenues dans ladite file d'attente et la suppression concomitante de ladite file d'attente d'information plus anciennes, selon le principe du premier entré - premier sorti, ou FIFO ; et le calcul d'une nouvelle estimation de ladite vitesse du vent par interpolation à partir des informations stockées dans la file d'attente ainsi modifiée.

10. Procédé selon l'une des revendications précédentes comprenant également la détermination d'un paramètre d'incertitude (σ) de ladite vitesse par rapport à l'air dudit aéronef assisté.

11. Procédé selon l'une des revendications précédentes dans lequel lesdits messages contiennent également une troisième information représentative de la pression au niveau de la mer en correspondance de la position de chaque dit aéronef assistant, le procédé comportant également une étape d'estimation de la pression au niveau de la mer en correspondance de la position dudit aéronef assisté par interpolation desdites troisièmes informations.

12. Procédé de vérification du fonctionnement d'une chaîne anémométrique (DAB) embarquée sur un aéronef, dit aéronef assisté, comportant les étapes suivantes :

A) mesurer une vitesse par rapport à l'air ($\overrightarrow{CAS_{SAB}}$) dudit aéronef assisté au moyen de ladite chaîne anémométrique ;

B) déterminer ladite vitesse par rapport à l'air ($\overrightarrow{CAS}$) dudit aéronef, ainsi que son paramètre d'incertitude ($\sigma$), par un procédé selon la revendication 9 ; et

C) considérer que ladite chaîne anémométrique est défaillante lorsque la différence entre ladite vitesse mesurée et ladite vitesse déterminée excède ledit paramètre d'incertitude.

13. Utilisation d'un procédé selon l'une des revendications 1 à 11 en cas de défaillance d'une chaîne anémométrique embarquée sur ledit aéronef assisté.

14. Procédé de pilotage automatique d'un aéronef, dit assisté, comportant les étapes suivantes :

i) déterminer une vitesse par rapport à l'air dudit aéronef assisté ainsi qu'un paramètre d'incertitude de ladite vitesse au moyen d'un procédé selon la revendication 12 ;

ii) corriger les limites supérieure et inférieure de vitesse par rapport à l'air admises pour le vol dudit aéronef en tenant compte dudit paramètre d'incertitude ; et

iii) utiliser un système de pilotage automatique (P/A) pour maintenir la vitesse par rapport à l'air dudit aéronef assisté à l'intérieur desdites limites supérieure et inférieure corrigées.

15. Système de détermination d'une vitesse par rapport à l'air d'un aéronef, dit aéronef assisté par un procédé selon l'une des revendications 1 à 11, comprenant :

- un dispositif (RSN) de détermination de la position et de la vitesse par rapport au sol dudit aéronef ;

- un récepteur (REC) pour recevoir une pluralité de messages ($M_1...M_n$) en provenance d'une pluralité d'autres aéronefs, dits assistants, chaque dit message contenant : une première information ($\vec{P}_1...\vec{P}_n$) indicative d'une position d'un dit aéronef assistant, et une deuxième information ($\vec{W}_1...\vec{W}_n$), indicative d'une vitesse du vent à ladite position ; et

- un processeur (PROC) configuré ou programmé pour estimer une vitesse du vent à la position dudit aéronef assisté par interpolation des valeurs de vitesse du vent aux positions desdits aéronefs assistants et pour calculer une vitesse par rapport à l'air dudit aéronef assisté par différence vectorielle entre sa vitesse par rapport au sol et la vitesse estimée du vent.

16. Système selon la revendication 15, comprenant également une chaîne anémométrique (DAB) pour déterminer une vitesse du vent ou une vitesse de l'aéronef par rapport à l'air, ainsi qu'un émetteur (EM) pour diffuser un message ($M_i$) contenant : une première information, indicative d'une position dudit aéronef, et une deuxième information, indicative d'une vitesse du vent à ladite position.

17. Système selon l'une des revendications 15 et 16 dans lequel ledit récepteur, et le cas échéant ledit émetteur, sont respectivement un récepteur et un émetteur ADS-B.

**Patentansprüche**

1. Verfahren zum Ermitteln einer Geschwindigkeit eines Luftfahrzeugs, assistiertes Luftfahrzeug (AA) genannt, gegenüber der Luft, das die folgenden Schritte beinhaltet:

a) Ermitteln einer Position ($\vec{P}$) des assistierten Luftfahrzeugs;

b) Messen einer Geschwindigkeit ($\overrightarrow{GS}$) des assistierten Luftfahrzeugs gegenüber dem Boden;

c) Empfangen von mehreren Nachrichten ($M_1$ - $M_4$) von mehreren anderen Luftfahrzeugen, assistierende Luftfahrzeuge ($AST_1$ - $AST_4$) genannt, wobei jede Nachricht Folgendes beinhaltet: eine erste Information $\left( \vec{P}_1 - \vec{P}_4 \right)$, die eine Position eines assistierenden Luftfahrzeugs anzeigt, und eine zweite Information $\left( \vec{W}_1 - \vec{W}_3; \overrightarrow{GS}_4, \overrightarrow{TAS}_4 \right)$, die eine Windgeschwindigkeit an dieser Position anzeigt;

d) Schätzen einer Windgeschwindigkeit ($\vec{W}_{EST}$) an der Position des assistierten Luftfahrzeugs durch Interpolieren der in Schritt c) erhaltenen Windgeschwindigkeitswerte an den Positionen der assistierenden Luftfahrzeuge; und

e) Berechnen einer wahren Geschwindigkeit TAS des assistierten Luftfahrzeugs anhand einer Vektordifferenz zwischen seiner in Schritt b) gemessenen Bodengeschwindigkeit und der in Schritt d) geschätzten Windgeschwindigkeit.

2. Verfahren nach Anspruch 1, das ferner den folgenden Schritt beinhaltet:

f) Berechnen, auf der Basis der in Schritt e) berechneten wahren Geschwindigkeit, wenigstens eines Parameters, ausgewählt aus einer konventionellen oder korrigierten Geschwindigkeit CAS und einer Mach-Zahl.

3. Verfahren nach einem der vorherigen Ansprüche, wobei die Schritte a) und b) mittels wenigstens eines an Bord des assistierten Luftfahrzeugs befindlichen Gerätes (RSN) implementiert werden, ausgewählt aus: einem GNSS-Empfänger und einem Inertialsystem.

4. Verfahren nach einem der vorherigen Ansprüche, wobei die Nachrichten von den assistierenden Luftfahrzeugen verteilt werden.

5. Verfahren nach Anspruch 4, wobei die Nachrichten von den assistierenden Luftfahrzeugen verteilt und von dem assistierten Luftfahrzeug gemäß dem ADS-B-Protokoll empfangen werden.

6. Verfahren nach einem der vorherigen Ansprüche, wobei die zweite Information einen Messwert der Geschwindigkeit gegenüber dem Boden ($\overrightarrow{GS}_4$) und einen Messwert der Geschwindigkeit gegenüber der Luft ($\overrightarrow{TAS}_4$) des assistierenden Luftfahrzeugs ($AST_4$) umfasst, von denen die Windgeschwindigkeit abgeleitet werden kann.

7. Verfahren nach einem der vorherigen Ansprüche, wobei wenigstens die Schritte d) und e) von einem an Bord des assistierten Luftfahrzeugs befindlichen Prozessor (PROC) durchgeführt werden können.

8. Verfahren nach einem der vorherigen Ansprüche, wobei der Schritt d) durch Kriging implementiert wird.

9. Verfahren nach einem der vorherigen Ansprüche, wobei die Schritt c) und d) Folgendes beinhalten:

- Empfangen einer vordefinierten Anzahl N der Nachrichten, Extrahieren der ersten und zweiten in den Nachrichten enthaltenen Information und Speichern derselben in einer Wareschlange mit Länge N;
- Berechnen einer ersten Schätzung der Windgeschwindigkeit durch Interpolieren auf der Basis der in der Warteschlange gespeicherten Informationen; und
- Speichern, beim anschließenden Empfangen weiterer der Nachrichten, der in der Warteschlange enthaltenen Informationen und gleichzeitig Entfernen von älteren Informationen aus der Warteschlange gemäß dem FIFO-(First In First Out)-Prinzip, und Berechnen einer neuen Schätzung der Windgeschwindigkeit durch Interpolieren auf der Basis der in der so modifizierten Warteschlange gespeicherten Informationen.

10. Verfahren nach einem der vorherigen Ansprüche, das ferner das Ermitteln eines Unsicherheitsparameters (σ) der Geschwindigkeit des assistierten Luftfahrzeugs gegenüber der Luft beinhaltet.

11. Verfahren nach einem der vorherigen Ansprüche, wobei die Nachrichten auch eine dritte Information enthalten, die den Druck auf Meeresspiegel repräsentiert, der der Position jedes assistierenden Luftfahrzeugs entspricht, wobei das Verfahren ferner einen Schritt des Schätzens des Drucks auf Meeresspiegel beinhaltet, der der Position des assistierten Luftfahrzeugs entspricht, durch Interpolieren der dritten Informationen.

12. Verfahren zum Prüfen des Betriebs einer Anemometerkette (DAB) an Bord eines Luftfahrzeugs, assistiertes Luftfahrzeug genannt, das die folgenden Schritte beinhaltet:

A) Messen einer Geschwindigkeit ($\overrightarrow{CAS_{SAB}}$) des assoziierten Luftfahrzeugs gegenüber der Luft mit Hilfe der Anemometerkette;
B) Ermitteln der Geschwindigkeit ($\overrightarrow{CAS}$) des Luftfahrzeugs gegenüber der Luft sowie seines Unsicherheitsparameters (σ) mit einem Verfahren nach Anspruch 9; und
C) Ansehen der Anemometerkette als fehlerhaft, wenn die Differenz zwischen der gemessenen Geschwindigkeit und der ermittelten Geschwindigkeit den Unsicherheitsparameter übersteigt.

**13.** Anwendung eines Verfahrens nach einem der Ansprüche 1 bis 11 im Falle eines Fehlers in einer an Bord des assistierten Luftfahrzeugs befindlichen Anemometerkette.

**14.** Verfahren zum automatischen Fliegen eines Luftfahrzeugs, assistiertes Luftfahrzeug genannt, das die folgenden Schritte beinhaltet:

i) Ermitteln einer Geschwindigkeit des assistierten Luftfahrzeugs gegenüber der Luft sowie eines Unsicherheitsparameters der Geschwindigkeit mit einem Verfahren nach Anspruch 12;
ii) Korrigieren der Ober- und Untergrenzen der Geschwindigkeit gegenüber der Luft, die für den Flug des Luftfahrzeugs zulässig sind, unter Berücksichtigung des Unsicherheitsparameters; und
iii) Benutzen eines Autopilotsystems (P/A) zum Halten der Geschwindigkeit des assistierten Luftfahrzeugs gegenüber der Luft innerhalb der korrigierten Ober- und Untergrenzen.

**15.** System zum Ermitteln einer Geschwindigkeit eines Luftfahrzeugs, assistiertes Luftfahrzeug genannt, gegenüber der Luft mit einem Verfahren nach einem der Ansprüche 1 bis 11, das Folgendes umfasst:

- eine Vorrichtung (RSN) zum Ermitteln der Position und der Geschwindigkeit des Luftfahrzeugs gegenüber dem Boden;
- einen Empfänger (REC) zum Empfangen von mehreren Nachrichten ($M_1...M_n$) von mehreren anderen Luftfahrzeugen, assistierende Luftfahrzeuge genannt, wobei jede Nachricht Folgendes beinhaltet: eine erste Information ($\vec{P}_1...\vec{P}_n$), die eine Position eines assistierenden Luftfahrzeugs anzeigt, und eine zweite Information ($\vec{W}_1...\vec{W}_n$), die eine Windgeschwindigkeit an dieser Position anzeigt; und
- einen Prozessor (PROC), konfiguriert oder programmiert zum Schätzen einer Windgeschwindigkeit an der Position des assistierten Luftfahrzeugs durch Interpolieren von Windgeschwindigkeitswerten an den Positionen der assistierenden Luftfahrzeuge und zum Berechnen einer Geschwindigkeit des Luftfahrzeugs gegenüber der Luft anhand der Vektordifferenz zwischen seiner Bodengeschwindigkeit und der geschätzten Windgeschwindigkeit.

**16.** System nach Anspruch 15, das ferner eine Anemometerkette (DAB) zum Ermitteln einer Windgeschwindigkeit oder einer Geschwindigkeit des Luftfahrzeugs gegenüber der Luft sowie einen Sender (EM) zum Verteilen einer Nachricht ($M_i$) umfasst, die Folgendes enthält: eine erste Information, die eine Position des Luftfahrzeugs anzeigt, und eine zweite Information, die eine Windgeschwindigkeit an dieser Position anzeigt.

**17.** System nach einem der Ansprüche 15 und 16, wobei der Empfänger, und ggf. der Sender, jeweils ein ADS-B-Empfänger und -Sender sind.

**Claims**

**1.** A method for determining an airspeed of an aircraft, called assisted aircraft (AA), comprising the following steps:

a) determining a position ($\vec{P}$) of said assisted aircraft;
b) measuring a ground speed ($\overrightarrow{GS}$) of said assisted aircraft;
c) receiving a plurality of messages ($M_1$ - $M_4$) from a plurality of other aircraft, called assistant aircraft ($AST_1$ - $AST_4$), each of said messages containing: a first item of information ($\vec{P}_1 - \vec{P}_4$) indicating a position of an assistant aircraft and a second item of information ($\overrightarrow{W}_1 - \overrightarrow{W}_3$; $\overrightarrow{GS}_4, \overrightarrow{TAS}_4$) indicating a wind speed at said position;
d) estimating a wind speed ($\vec{W}_{EST}$) at the position of said assisted aircraft by interpolating the wind speed values at the positions of said assistant aircraft that are obtained during step c); and
e) computing a true speed TAS of said assisted aircraft using a vector difference between its ground speed, which is measured during step b), and the wind speed, which is estimated during step d).

**2.** The method according to claim 1, further comprising the following step:

f) computing, on the basis of the true speed computed during step e), at least one parameter selected from a conventional or calibrated speed CAS and a Mach number.

3. The method according to any one of the preceding claims, wherein said steps a) and b) are implemented by means of at least one device (RSN) on board said assisted aircraft and selected from: a GNSS receiver and an inertial unit.

4. The method according to any one of the preceding claims, wherein said messages are broadcast by said assistant aircraft.

5. The method according to claim 4, wherein said messages are broadcast by said assistant aircraft and are received by said assisted aircraft according to the ADS-B protocol.

6. The method according to any one of the preceding claims, wherein said second item of information comprises a ground speed measurement ($\overrightarrow{GS}_4$) and an airspeed measurement ($\overrightarrow{TAS}_4$) of said assistant aircraft (AST$_4$), from which said wind speed can be deduced.

7. The method according to any one of the preceding claims, wherein at least said steps d) and e) are carried out by a processor (PROC) on board said assisted aircraft.

8. The method according to any one of the preceding claims, wherein said step d) is implemented by Kriging.

9. The method according to any one of the preceding claims, wherein said steps c) and d) comprise:

   - receiving a predefined number N of said messages, extracting first and second items of information that are contained in said messages and storing them in a queue of length N;
   - computing a first estimate of said wind speed by interpolating on the basis of the information stored in said queue; and
   - storing, when more of said messages are subsequently received, the information contained in said queue and concomitantly removing older information from said queue, according to the first in - first out (FIFO) principle, and computing a new estimate of said wind speed by interpolating on the basis of information stored in the thus modified queue.

10. The method according to any one of the preceding claims, further comprising determining a parameter of uncertainty ($\sigma$) of said airspeed of said assisted aircraft.

11. The method according to any one of the preceding claims, wherein said messages also contain a third item of information that represents the pressure at sea level that corresponds to the position of each assistant aircraft, said method further comprising a step of estimating the pressure at sea level that corresponds to the position of said assisted aircraft by interpolating said third items of information.

12. A method for checking the operation of an anemometric chain (DAB) on board an aircraft, called assisted aircraft, comprising the following steps:

   A) measuring an airspeed ($\overrightarrow{CAS_{SAB}}$) of said assisted aircraft using said anemometric chain;
   B) determining said airspeed ($\overrightarrow{CAS}$) of said aircraft, as well as its parameter of uncertainty ($\sigma$), using a method according to claim 9; and
   C) considering said anemometric chain to be faulty when the difference between said measured speed and said determined speed exceeds said parameter of uncertainty.

13. The use of a method according to any one of claims 1 to 11 in the event of a fault in an anemometric chain on board said assisted aircraft.

14. A method for automatically piloting an aircraft, called assisted aircraft, comprising the following steps:

   i) determining an airspeed of said assisted aircraft, as well as a parameter of uncertainty of said speed using a method according to claim 12;
   ii) correcting the upper and lower airspeed limits that are permitted for the flight of said aircraft, taking into account said parameter of uncertainty; and

iii) using an automatic piloting system (P/A) to maintain the airspeed of said assisted aircraft within said corrected upper and lower limits.

15. A system for determining an airspeed of an aircraft, called assisted aircraft, using a method according to any one of claims 1 to 11, comprising:

- a device (RSN) for determining the position and the ground speed of said aircraft;
- a receiver (REC) for receiving a plurality of messages ($M_1...M_n$) from a plurality of other aircraft, called assistant aircraft, each message containing: a first item of information ($\vec{P}_1...\vec{P}_n$) indicating a position of an assistant aircraft and a second item of information ($\vec{W}_1...\vec{W}_n$) indicating a wind speed at said position; and
- a processor (PROC) that is configured or programmed to estimate a wind speed at the position of said assisted aircraft by interpolating wind speed values at the positions of said assistant aircraft and for computing an airspeed of said aircraft using the vector difference between its ground speed and the estimated wind speed.

16. The system according to claim 15, further comprising an anemometric chain (DAB) for determining a wind speed or an airspeed of said aircraft, as well as an emitter (EM) for broadcasting a message ($M_i$) containing: a first item of information indicating a position of said aircraft and a second item of information indicating a wind speed at said position.

17. The system according to any one of claims 15 and 16, wherein said receiver, and if applicable said emitter, are an ADS-B receiver and emitter, respectively.

FIG.1

FIG.2

FIG.3A

FIG.3B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2348285 A

**Littérature non-brevet citée dans la description**

- **A.C. IN'T VELD et al.** Real-time Wind Profile Estimation using Airborne Sensors. *AIAA Guidance Navigation and Control Conference,* 2011